# EUROPEAN PATENT SPECIFICATION

(11) **EP 2 106 009 B1**
(45) Date of publication and mention of the grant of the patent: **28.06.2017**
(21) Application number: 09155671.2
(22) Date of filing: 20.03.2009
(51) Int. Cl.: H02J 9/00

(54) **System and method to reduce power consumption during stand-by mode**
System und Verfahren zur Reduzierung des Stromverbrauchs im Standby-Modus
Système et procédé pour réduire la consommation de puissance pendant le mode de veille

(30) Priority: 26.03.2008 TR 200802012
(43) Date of publication of application: 30.09.2009
(73) Proprietor: Vestel Dijital Üretim Sanayi A.S., 45030 Manisa (TR)
(72) Inventor: Çesmeci, Mete, 45030 Manisa (TR); Tüzün, Levent, 45030 Manisa (TR)
(74) Representative: Cayli, Hülya

(56) References cited:
- DE-A1- 19 545 659
- US-A- 5 414 475
- US-A1- 2002 012 258
- US-A1- 2002 190 797
- US-B1- 6 525 666

## Description

### Technical Field

The present invention relates to a method and system for saving energy consumed by an electronic system during stand-by mode.

### Prior Art

Many electronic devices in consumer electronics market can be switched to the stand-by mode, in addition to being powered on and off. If an electronic device switched to the stand-by mode is controlled by means of a remote control, it can still detect user-transmitted commands via the remote control, and if necessary, it can be activated from the stand-by mode. An electronic device in stand-by mode can detect the signals directed to itself in the present ambiance, and can be switched to operating mode from stand-by, and can again be turned to the stand-by mode upon user request for energy saving purposes. In the last years, during which the power-saving issue has gained relatively more significance, there has been an increasing demand observable, to reduce the energy consumed during stand-by mode by television receivers, display systems, and other electronic devices.

Electronic devices must be capable of detecting any user command for waking up from stand-by mode and once they receive the command to switch wake up, they must be capable to do so. Therefore the electronic devices must be furnished with such systems that would enable them to detect any activation even when they are in the stand-by mode, and to switch to start operating from the stand-by mode. Even if electronic devices consume lower energy in the stand-by mode as compared to their operating mode, it is known in the prior art, that they still consume power during stand-by of around 5W, 3W, 1W.

Some methods have been developed for saving power during stand-by mode in some systems according to the prior art. One of these methods is disclosed in the patent application EP1783887A1. In the patent application EP1783887A1 is disclosed a system, wherein a battery-equipped arrangement is provided in the electronic device, normally operated by the mains supply, for supplying the power consumed during the stand-by mode. With the electronic device switched to the stand-by mode, the component energizing the signal receiver/transmitter components is powered by means of a battery for enabling the device to start operating when desired, so once a activation signal is detected, the system deactivates the battery-supplied component and is connected back to the mains supply.

In the systems according to the prior art, a capacitor is employed in place of a battery, and the energy stored in the capacitor is exploited in the electronic device during the stand-by mode. The systems according to the prior art, however, involve high energy consumption while they are activated from stand-by to the ON mode, and back to the OFF mode, and even if they store energy on themselves to some extent, they sometimes cannot be powered ON when stored energy is discharged or the system is operated for the first time.

For instance, the prior art document US 2002/190797 A1 discloses a stand by system, in which an energy storage unit is used to supply energy to the stand by circuitry. The energy of the storage unit is monitored by the stand by circuitry and charging operation is done whenever needed. However, non-existence of energy in the storage unit results in the failure of the operation of the stand by circuitry since the power supply cannot be turned on as soon as a control signal is sent to power supply by the stand by circuitry.

### Objective of Invention

The objective of the present invention is to overcome the problems encountered in the prior art and to develop an efficient system and method to reduce the power consumption of electronic devices during stand-by mode.

### Description of Figures

**Figure 1** is a schematic diagram of the present invention.
**Figure 2** is a block diagram illustrating a system implemented according to the main principle of the present invention.

### Description of Invention

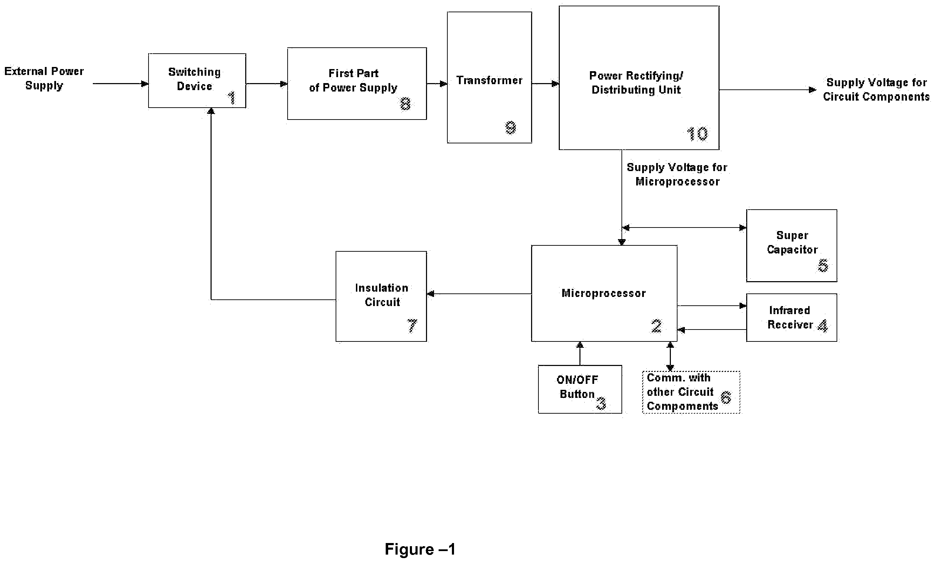

The operating principle of an arrangement implemented for reducing power consumption in stand-by mode according to the present invention is illustrated in Figure 1. According to the system illustrated in Figure 1, a power supply (preferably mains supply) to which the electronic system is connected is coupled to a switching device (1). A microprocessor (2) connected to the switching device (1) controls the same device (1) to enable or disable it for energizing the system (8, 9, 10) supplying the electronic device's internal energy, said switching device (1) supplying energy to the electronic system as well. Opening or closing the switching device (1) switches the electronic device to stand-by mode, or wakes it up from the stand-by mode, thanks to a microprocessor (2) illustrated in Figure 1 and software preloaded on said microprocessor, with the aid of an insulation circuit (7). Accordingly, when the switching device (1) is open, the mains supply will not energize the system components (8, 9, 10) providing the internal energy of the electronic device, and when the switching device (1) is closed, it shall supply energy to the system components (8, 9, 10) to provide the internal energy of said electronic device.

In the normal operation mode of the electronic device, the system components (8, 9, 10) providing the internal energy of the electronic device preferably convert alternative current of the mains supply to direct current, and feeds the power-consuming components in operating condition within the electronic device with direct current.

Once the electronic device is switched to stand-by mode, the electronic device must be capable to detect any activation command user-transmitted by the remote control and a microprocessor provided in said electronic device must be able to activate the device for waking up the device from stand-by mode.

The electronic device is energized by the mains supply while operating, and once it is switched to the stand-by mode, an internal signal receiver, evaluator, and other components to switch to the mains supply must be active to detect any activating signal to be transmitted by the user. A capacitor (5) disposed in the electronic device provides the energy of those circuit components (2) receiving the signals (4) during stand-by mode and evaluating such signals.

The capacitor (5) stores energy while the electronic device is in operation, and at the moment the electronic device is switched to stand-by mode, the signal-detecting units (2, 4) and the switching devices (7, 1) are fed with the energy stored in the capacitor (super capacity). The decision on selecting the mains supply as the source of energy in operation mode, or on energizing the switching (7, 1), signal-receiving (4) and decision-making (2) components in stand-by mode by means of a capacitor in the system is made by a microprocessor (2) in the electronic device according to predetermined rules. The circuit components (8, 9, 10), which are active while the electronic device is in operation and which provide the internal energy of the electronic device according to predetermined rules loaded on the microprocessor in the electronic device are deactivated once the electronic device is switched to stand-by mode by means of a switching device (1, 7) and a microprocessor (2), whereas only those components in the system, which are required to detect and receive any user-transmitted signal are fed by the capacitor with previously-stored energy.

According to the working principle of the present invention, the voltage value of the capacitor (5) feeding certain circuit components in the electronic system during stand-by mode is continuously measured by means of a microprocessor (2), and once this value drops down below a certain level, the circuit components to supply energy to the capacitor are opened-closed for a certain period of time to let the capacitor store back energy according to predetermined rules defined on the microprocessor (2).

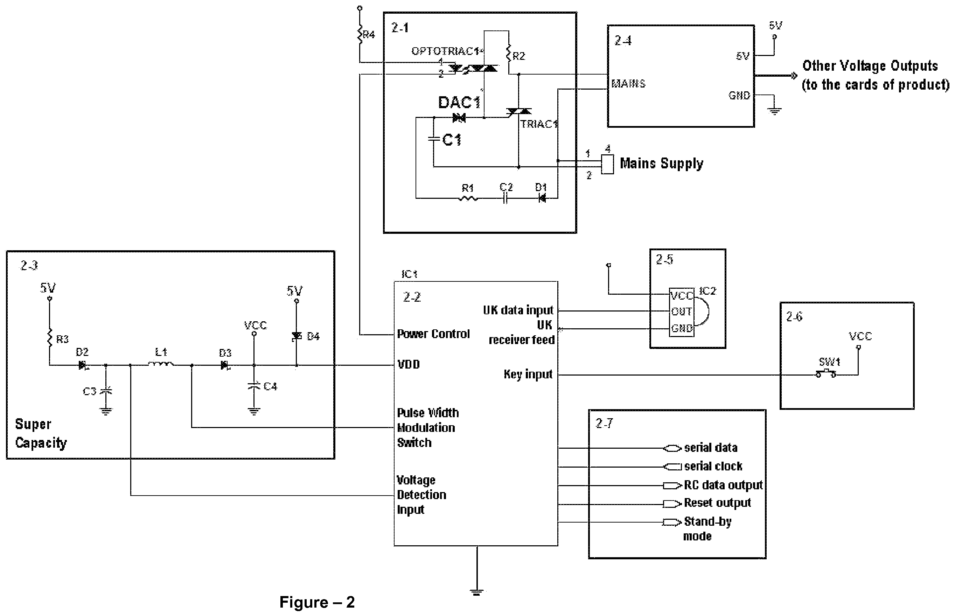

The way the electronic device operates during stand-by mode, the way it switches to operating from stand-by mode, and the way it switches from OFF to the ON mode for the first time are described by making references to an illustrative circuit given in Figure 2.

The circuit made for illustrating the present invention as shown in Figure 2 comprises a microprocessor (2-2), a capacitor (power storage unit) (2-3) arrangement which activates in stand-by mode, a power switching system (2-1), a power rectifying/distributing system (2-4) meeting the electronic device's power requirement under normal operation, a signal (infrared) receiver (2-5) for detecting user-transmitted remote control commands, a power ON-OFF button (2-6), and a control unit (2-7) for controlling the circuit components coupled to the electronic system. In order to elaborate the present invention such cases shall be described in detail in which the electronic device is powered ON for the first time from OFF mode, is switched to stand-by mode, is fed by super capacity during the stand-by mode, switched from the stand-by to the ON mode, and is switched back to the stand-by from the ON mode.

According to the circuit illustrated in Figure 2, electrical energy provided from the mains supply under normal operating conditions is conducted to the power distribution system (2-4) by the power switching system (2-1) and the circuit components (2-2, 2-3, 2-5, 2-6) are provided with power. The power distribution system (2-4) may be any power supply, which is capable of converting alternative current to direct current, and supplying direct current to the circuit components disposed in the electronic device; it is preferably a switching-mode power supply (SMPS) used in display systems. The energy consumed by the circuit components (2-2, 2-5) in the electronic device illustrated in Figure 2 during stand-by mode is supplied with the energy stored in the super capacity (C3) within the capacitor arrangement (2-3).

In a case, according to the present invention, in which the electronic device is not connected to the mains supply and is not operating, some circuit components of the device, which must be switched to the stand-by mode with energizing, i.e. plugging the device into the mains supply, must be supplied with energy even in the stand-by mode. The circuit components such as the infrared receiver (2-5), microprocessor (2-2), etc. must be operative in the stand-by mode and these components must be fed with energy already stored on the super capacity (C3).

For storing the required amount of energy in said capacitor arrangement (2-3) for feeding the necessary circuit components in stand-by mode, the device is designed so that once the electronic device is plugged into the mains supply, the super capacity (C3) is fed for a predetermined period of short time. The first time the electronic device is plugged into the mains supply, the latter feeds the power switching unit (2-1) via an energy line (1, 2). One line of the energy fed to the power switching unit via lines (1 and 2) is conducted to the energy rectifying/distributing system (2-4) through line (1), and energy must be transferred through the energy lines (1 and 2) to this unit to let the power rectifying/distributing system receive energy. While energy line 1 is coupled directly to the power rectifying/distributing system (2-4), the ability of line 2 to conduct energy to the power rectifying/distributing system (2-4) is controlled by means of line 1. A diode (D1), capacitor (C2), and a resistor (R1) connected in series to energy line 1 conducts the energy supply to the power rectifying/distributing system (2-4) according to predetermined values, while the electronic device is plugged into the mains supply for the first time; but the capacitor (C2) is charged for a certain period of time in line with predetermined R1 and C2 values, and then blocks the current flow through energy line 1 and thus the power supply to the rectifying/distributing system (2-4). In order to conduct more energy to the power rectifying/distributing system (2-4), it is necessary to transmit a signal from the control output connected to the microprocessor (2-2) to the OPTOTRIAC control unit, and the OPTOTRIAC control unit must allow power to be transferred to the power rectifying/distributing system (2-4) through DIAC1.

The power rectifying/distributing system (2-4) fed by the mains supply for a predetermined period of time at the moment the electronic device is plugged into the mains supply for the first time supplies voltage to the circuit components in the electronic device during this time period. As a result of the power provided by the power rectifying/distributing system (2-4) to the circuit components for a certain period of time while the electronic device is first connected to the mains supply, the microprocessor (2-2) starts operating, the super capacity (C3) in the capacitor arrangement (2-3) starts charging, and the measurement of voltage at the super capacity (C3) is started by means of the voltage detecting mechanism of the microprocessor (2-2). While the electronic device is connected to the mains supply for the first time, the capacitor (C3) is charged for a certain period of time as a result of the energy-conducting switching device (2-1) remaining in conduction and the power rectifying/distributing system (2-4) being supplied with energy - the amount of energy stored is measured by means of a voltage measuring input connected to the microprocessor (2-2). In cases when the C3 capacity is charged inadequately and if necessitated, a signal can be transmitted again to the OPTOTRIAC in the switching unit (2-1) with a power control signal generated in the microprocessor, so that the OPTOTRIAC opens and supplies energy to the power distributing unit (2-4), and if the electronic device is connected to the mains supply, the microprocessor (2-2) can continuously send signals to the OPTOTRIAC and make the power distribution system (2-4) operate continuously according to the circuit illustrated in Figure 2. Thanks to this feature, the energy that the electronic device may consume during stand-by mode can be stored in the C3 capacitor unit while the electronic device is plugged into the mains plug for the first time, and the microprocessor (2-2) can keep the OPTOTRIAC circuit element open as long as it is required, so that an desired amount of energy is stored in the C3 super capacity within capacity limits.

The electronic device may switch to the stand-by mode after the moment it is connected to the mains supply, and the energy stored in the C3 capacity during stand-by mode can provide power to the circuit components (2-2, 2-5, 2-7), which are aimed to operate during stand-by mode. The energy stored in the C3 capacity in the power storage unit (2-3) during stand-by mode can be delivered to predetermined circuit components in the electronic device under the control of the microprocessor (2-2) thanks to the structure of the C3 capacity, this is because when the energy stored in capacitors is consumed, the output voltages of capacitors are dropped as a result of this energy decrease, and the circuit components in the electronic device do not operate under a certain voltage value even in the stand-by mode.

The manner how energy is supplied to the circuit components in the electronic device during stand-by mode is controlled by means of the microprocessor (2-2). The microprocessor (2-2) can control the amount of energy that must be conducted to itself from the output of the pulse width modulation and via the capacitor (C3); accordingly, if energy decrease and voltage drop occur at the capacitor (C3) during stand-by mode, the microprocessor (2-2) can increase the pulse width modulation per cycle at the output of the pulse width modulation and can control the voltage level at the output of the C3 capacitor. Keeping constant the voltage value at the output of the capacitor (C3) during standby mode is significant for such devices which must be operative over a certain voltage threshold level during stand-by mode.

In order to wake up (activate) the electronic device from the stand-by mode according to the present invention, activation commands to be transmitted by means of a remote control must be detectable by the electronic device even during the stand-by mode. There is provided a signal receiver (infrared receiver) (2-5) to have any user-transmitted remote control signals detected by the electronic device. The infrared receiver (2-5) is capable of detecting infrared remote control signals, and this receiver must be maintained operative in the stand-by mode for having any user-transmitted signal received by the electronic device during that mode. An infrared receiver (2-5) used according to a representative embodiment of the present invention is operative at 21 ms cycles under normal conditions and it draws around 1 mA current in one cycle. The infrared receiver component in the infrared receiver unit (2-5) does not have to be continuously operative during one cycle in the stand-by mode. The infrared receiver unit may be kept operative for a certain period of time (shorter than the cycle) in the operating period, and if any signal is transmitted by the user, the infrared receiver may be kept operative over the entire cycle for a certain time as of the next cycle so as to detect any user-transmitted commands. For instance, the infrared receiver in the infrared receiver unit (2-5) may be kept operative in a time interval of 410 µs in a 21 ms cycle, so that around 195 µA current is drawn in place of 1 mA in 21 ms. When the user depresses any key on the remote control according to the present invention, a determined portion of signal is detected by the microprocessor (2-2) at the side of the infrared receiver and the infrared receiver unit can be activated over the entire cycle for the following cycles. In infrared remote controls, which have been widely used in consumer electronics, the same signal is transmitted more than once when the user depresses the respective key on the control; e.g. when the user depresses a key once on a remote control, which is widely used and is operating in accordance to the RC5 protocol developed by Philips, the same command is transmitted by the remote control in every 114 ms. Since in practice, the time during which the user depresses and releases a key on the remote control shall be longer than 114 ms, the signals transmitted by the remote control are generally transmitted more than once.

The infrared receiver (2-5) may be kept operative during a certain interval of a certain cycle for detecting any transmitted signal during the stand-by mode, and when it detects any signal, it may be rendered operative over the following cycles, and may forward the signals it receives to the microprocessor (2-2) for evaluation. When any signal is transmitted to the electronic device during stand-by mode according to the present invention, the infrared receiver coupled to the electronic device is rendered operative over the entire length of the following cycle, following the cycle it first receives the signal, and thanks to the fact that the same signal is transmitted more than once following one keystroke on the remote control by the user, it detects the command transmitted to itself by means of the next signal. If the user sends any other command by means of depressing a key on the remote control, except that command to wake up the electronic device from stand-by mode, it is assumed that the user transmits at least two signals at one keystroke. The first signal arrives the remote control receiver meaningless, the infrared receiver becomes active throughout the following cycles with the detection of the first signal, and detects that the signal transmitted to it is not activation (i.e. wake-up signal) and switches back to the stand-by mode. If the user transmits an activation command to the electronic device during stand-by mode, the microprocessor allows energy to be supplied to the power rectifying/distributing system connected to the electronic device in response to the command detected by means of the infrared receiver and causes the circuit components in the electronic device to become operative. When the electronic device is to be turned off, it switches back to the stand-by mode with the aid of the microprocessor control unit (2-7) after the user-transmitted signal by the remote control is received.

Thanks to the present invention, a method and system is provide, which make it possible for an electronic device to consume very low energy during stand-by mode, to automatically switch to the stand-by mode once it is plugged into the mains supply for the first time, to wake-up from the stand-by mode in response to a user command, and to save power consumed by the infrared receiver during stand-by mode.

## Claims

1. A system for saving power consumed during stand-by mode by an electronic device, which is adapted to be controlled by means of a remote control and which is adapted to switch from the operating mode to the stand-by mode, and from the stand-by mode to the operating mode, comprising the following circuit components,
- a microprocessor (2-2),
- a super capacity (C3),
- a power rectifying/distributing system (2-4),
- a power switching system (2-1),
- a signal receiving unit (2-5),
- said power rectifying/distributing system (2-4) is adapted to provide energy from the mains by the power switching system (2-1) to the microprocessor (2-2), the super capacity (C3) and the signal receiving unit (2-5) under normal operating conditions,
- said power switching system (2-1) is adapted to block energy supply to said power rectifying/distributing system (2-4) and the electronic device is switched to the stand-by mode, if infrared signals transmitted to said signal receiving unit (2-5) are evaluated by the microprocessor (2-2) as a command to switch to the stand-by mode,
- said super capacity (C3) is adapted to supply energy to said microprocessor (2-2) and said signal receiving unit (2-5) in the electronic device during stand-by mode,
- said microprocessor (2-2) is adapted to control the supply of energy to said power switching system (2-1) by controlling a switching unit (OPTOTRIAC1) of said power switching system (2-1) to allow power to be transferred to the power rectifying/distributing system (2-4);
**characterized in that** said power switching system (2-1) comprises a diode (D1), a capacitor (C2), and a resistor (R1) connected in series in order to supply energy to the power rectifying/distributing system (2 - 4) for a certain period of time, which is determined by values of the capacitor (C2), and the resistor (R1), when the electronic device is plugged into the mains supply for the first time,
and **in that**, during the stand-by mode, said microprocessor (2-2) is adapted to control the energy stored in said super capacity (C3) in a continues manner and said microprocessor (2-2) is adapted to allow energy to be conducted to said power rectifying/distributing system (2-4) through the power switching system (2-1), if the energy of said super capacity (C3) drops down below a predetermined level.

2. A system according to Claim 1, **characterized in that** said signal receiving unit (2-5) is not maintained operative over the entire cycle in a determined signal-detecting cycle during stand-by mode.

3. A system according to Claim 2, **characterized in that** during stand-by mode, if a remote control signal is transmitted by the user to said signal receiving unit (2-5) in said signal detecting cycle, said signal receiving unit (2-5) is rendered operative for a certain period of time by the microprocessor (2-2), so that the remote control signal transmitted to said signal receiving unit is detected.

4. A method for saving power consumed during stand-by mode by an electronic device comprising a system according to the any of the preceding claims, which is adapted to be controlled by means of a remote control and which is adapted to switch from the operating mode to the stand-by mode, and from the stand-by mode to the operating mode, comprising the steps, by which
- providing energy from the mains by the power switching means (2-1) to the microprocessor (2-2), the super capacity (C3) and the signal receiving unit (2-5) under normal operating conditions,
- blocking energy supply to said power rectifying/distributing system (2-4) and switching the electronic device to the stand-by mode, if infrared signals transmitted to said signal receiving unit (2-5) are evaluated by the microprocessor (2-2) as a command to switch to the stand-by mode;
- supplying energy to microprocessor (2-2) and signal receiving unit (2-5) in the electronic device by said super capacity (C3) during stand-by mode,
**characterized in that** said method comprises the step of supplying energy to the power rectifying/distributing system (2-4) for a certain period of time each time the electronic device is plugged into the mains supply for the first time and **in that**, during the stand-by mode, controlling the energy stored in said super capacity (C3) in a continues manner and allowing energy to be conducted to said power rectifying/distributing system (2-4) through the power switching system (2-1), if the energy of said super capacity (C3) drops down below a predetermined level.

## Patentansprüche

1. **System** zum Sparen von Strom, der während eines Standby-Modus eines elektrischen oder elektronischen Geräts verbraucht wird, das angepasst ist, von einer Fernbedienung gesteuert zu werden und das angepasst ist, von dem Betriebsmodus in den Standby-Modus und von dem Standby-Modus in den Betriebsmodus zu schalten, umfassend die folgenden Schaltungskomponenten,
- einen Mikroprozessor (2-2),
- einen Superkondensator (C3),
- ein Netzgleichrichter- oder Verteiler-System (2-4),
- ein Leistungsumschaltsystem (2-1),
- eine Signalempfangseinheit (2-5),
- wobei das System zum Gleichrichten/Verteilen (2-4) angepasst ist, Energie von dem Stromnetz durch das Leistungsumschaltungssystem (2-1) an den Mikroprozessor (2-2), den Superkondensator (C3) und die Signalempfangseinheit (2-5) unter normalen Betriebsbedingungen bereit zu stellen,
- wobei das Leistungsumschaltungssystem (2-1) angepasst ist, die Energieversorgung zum System zum Gleichrichten/Verteilen (2-4) zu unterbrechen, und das elektrische oder elektronische Gerät in den Standby- Modus geschaltet wird, falls an die Signalempfangseinheit (2-5) übertragene Infrarotsignale von dem Mikroprozessor (2-2) als ein Kommando zum Schalten in den Standby-Modus bewertet werden,
- wobei der Superkondensator (C3) angepasst ist, Energie an den Mikroprozessor (2-2) und die Signalempfangseinheit (2-5) in dem elektrischen oder elektronischen Gerät während des Standby-Modus bereit zu stellen,
- wobei der Mikroprozessor (2-2) angepasst ist, die Bereitstellung von Energie an das Leistungsumschaltungssystem (2-1) zu steuern, und zwar durch Steuern einer Schalt- oder Umschalteinheit (OPTOTRIAC1) des Leistungsumschaltungssystem (2-1), um eine Stromübertragung an das System (2-4) zu erlauben;
**dadurch gekennzeichnet, dass** das Leistungsumschaltungssystem (2-1) eine Diode (D1), einen Kondensator (C2) und einen Widerstand (R1) umfasst, die in Reihe geschaltet sind, um Energie an das System zum Gleichrichten/Verteilen (2-4) für eine bestimmte Zeitspanne bereit zu stellen, die durch Werte des Kondensators (C2) und des Widerstands (R1) bestimmt wird, wenn das elektrische oder elektronische Gerät zum ersten Mal an das Versorgungsnetz angeschlossen wird,
und dadurch, dass der Mikroprozessor (2-2), während des Standby-Modus, angepasst ist, die in dem Superkondensator (C3) gespeicherte Energie kontinuierlich zu steuern oder zu regeln und der Mikroprozessor (2-2) angepasst ist, eine Energieleitung an das System (2-4) durch das Leistungsumschaltungssystem (2-1) zu erlauben, falls die Energie des Superkondensators (C3) unter ein vorbestimmtes Level fällt.

2. System nach Anspruch 1, **dadurch gekennzeichnet, dass** die Signalempfangseinheit (2-5) nicht während des gesamten Zyklus in einem bestimmten Signalempfangszyklus während des Standby-Modus operativ (betriebsbereit) gehalten wird.

3. System nach Anspruch 2, **dadurch gekennzeichnet, dass** während des Standby-Modus, falls ein Signal der Fernbedienung durch den Nutzer an die Signalempfangseinheit (2-5) in dem Signalempfangszyklus übertragen wird, die Signalempfangseinheit (2-5) für eine bestimmte Zeitspanne durch den Mikroprozessor (2-2) operativ geschaltet wird, sodass das an die Signalempfangseinheit übertragene Signal der Fernbedienung detektiert wird.

4. **Verfahren** zum Sparen von Strom, der während eines Standby-Modus eines elektronischen Geräts, umfassend ein System nach einem der vorstehenden Ansprüche, verbraucht wird, das angepasst ist, von einer Fernbedienung gesteuert zu werden und das angepasst ist, von dem Betriebsmodus in den Standby-Modus und von dem Standby-Modus in den Betriebsmodus zu schalten, mit den Schritten:
- Bereitstellen von Energie von dem Stromnetz durch das Leistungsumschaltungssystem (2-1) an den Mikroprozessor (2-2), den Superkondensator (C3) und die Signalempfangseinheit (2-5) unter normalen Betriebsbedingungen,
- Unterbrechen der Energieversorgung an das System zum Gleichrichten/Verteilen (2-4) und Schalten des elektronischen Geräts in den Standby-Modus, falls an die Signalempfangseinheit (2-5) übertragene Infrarotsignale von dem Mikroprozessor (2-2) als ein Kommando zum Schalten in den Standby-Modus bewertet werden,
- Bereitstellen von Energie an den Mikroprozessor (2-2) und die Signalempfangseinheit (2-5) durch den Superkondensator (C3) in dem elektronischen Gerät während des Standby-Modus,
**dadurch gekennzeichnet, dass** das Verfahren den Schritt der Energieversorgung an das System (2-4) für eine bestimmte Zeitspanne, jedes Mal wenn das elektronische Gerät zum ersten Mal an das Versorgungsnetz angeschlossen wird, umfasst und dadurch, dass während des Standby-Modus, die in dem Superkondensator (C3) gespeicherte Energie kontinuierlich gesteuert oder geregelt wird und eine Energieleitung an das System (2-4) durch das Leistungsumschaltungssystem (2-1) erlaubt wird, falls die Energie des Superkondensators (C3) unter ein vorher festgelegtes Level fällt.

## Revendications

1. Système d'économie de puissance consommée pendant un mode veille par un dispositif électronique, qui est adapté pour être commandé au moyen d'une télécommande et qui est adapté pour commuter du mode de fonctionnement au mode veille, et du mode veille au mode de fonctionnement, comprenant les composants de circuit suivants,
- un microprocesseur (2-2),
- un supercondensateur (C3),
- un système de distribution/redressement de puissance (2-4),
- un système de commutation de puissance (2-1),
- une unité de réception de signal (2-5),
- ledit système de distribution/redressement de puissance (2-4) est adapté pour fournir de l'énergie depuis le réseau par le système de commutation de puissance (2-1) au microprocesseur (2-2), au supercondensateur (C3) et à l'unité de réception de signal (2-5) dans des conditions de fonctionnement normales,
- ledit système de commutation de puissance (2-1) est adapté pour bloquer une alimentation en énergie dudit système de distribution/redressement de puissance (2-4) et le dispositif électronique est commuté au mode veille, si des signaux infrarouges transmis à ladite unité de réception de signal (2-5) sont évalués par le microprocesseur (2-2) comme une commande de commutation au mode veille,
- ledit supercondensateur (C3) est adapté pour alimenter en énergie ledit microprocesseur (2-2) et ladite unité de réception de signal (2-5) dans le dispositif électronique pendant un mode veille,
- ledit microprocesseur (2-2) est adapté pour commander l'alimentation en énergie dudit système de commutation de puissance (2-1) en commandant une unité de commutation (OPTOTRIAC1) dudit système de commutation de puissance (2-1) pour permettre de transférer la puissance au système de distribution/redressement de puissance (2-4) ;
**caractérisé en ce que** ledit système de commutation de puissance (2-1) comprend une diode (D1), un condensateur (C2), et un résistor (R1) raccordés en série afin d'alimenter en énergie le système de distribution/redressement de puissance (2-4) pendant une certaine période de temps, qui est déterminée par des valeurs du condensateur (C2), et du résistor (R1), lorsque le dispositif électronique est branché sur l'alimentation réseau pour la première fois,
et **en ce que**, pendant le mode veille, ledit microprocesseur (2-2) est adapté pour commander l'énergie stockée dans ledit supercondensateur (C3) de manière continue et ledit microprocesseur (2-2) est adapté pour permettre de conduire l'énergie vers ledit système de distribution/redressement de puissance (2-4) par l'intermédiaire du système de commutation de puissance (2-1), si l'énergie dudit supercondensateur (C3) chute en dessous d'un niveau prédéterminé.

2. Système selon la revendication 1, **caractérisé en ce que** ladite unité de réception de signal (2-5) n'est pas maintenue opérationnelle sur la totalité du cycle dans un cycle de détection de signal déterminé pendant un mode veille.

3. Système selon la revendication 2, **caractérisé en ce que**, pendant un mode veille, si un signal de télécommande est transmis par l'utilisateur à ladite unité de réception de signal (2-5) dans ledit cycle de détection de signal, ladite unité de réception de signal (2-5) est rendue opérationnelle pendant une certaine période de temps par le microprocesseur (2-2), de sorte que le signal de télécommande transmis à ladite unité de réception de signal soit détecté.

4. Procédé d'économie puissance consommée pendant un mode veille par un dispositif électronique comprenant un système selon l'une quelconque des revendications précédentes, qui est adapté pour être commandé au moyen d'une télécommande et qui est adapté pour commuter du mode de fonctionnement au mode veille, et du mode veille au mode de fonctionnement, comprenant les étapes, par lesquelles
- fournir de l'énergie du réseau par le moyen de commutation de puissance (2-1) au microprocesseur (2-2), au supercondensateur (C3) et à l'unité de réception de signal (2-5) dans des conditions de fonctionnement normales,
- bloquer l'alimentation en énergie dudit système de distribution/redressement de puissance (2-4) et commuter du dispositif électronique au mode veille, si des signaux infrarouges transmis à ladite unité de réception de signal (2-5) sont évalués par le microprocesseur (2-2) comme une commande de commutation au mode veille ;
- alimenter en énergie le microprocesseur (2-2) et l'unité de réception de signal (2-5) dans le dispositif électronique par ledit supercondensateur (C3) pendant un mode veille,
**caractérisé en ce que** ledit procédé comprend l'étape d'alimentation en énergie du système de distribution/redressement de puissance (2-4) pendant une certaine période de temps, à chaque fois que le dispositif électronique est branché sur l'alimentation réseau pour la première fois, et **en ce que**, pendant le mode veille, la commande de l'énergie stockée dans ledit supercondensateur (C3) de manière continue et permettant de conduire l'énergie vers ledit système de distribution/redressement de puissance (2-4) par l'intermédiaire du système de commutation de puissance (2-1), si l'énergie dudit supercondensateur (C3) chute en dessous d'un niveau prédéterminé.
